# FASCICULE DE BREVET EUROPEEN

(11) **EP 2 425 118 B1**
(45) Date de publication et mention de la délivrance du brevet: **10.02.2016**
(21) Numéro de dépôt: 10715308.2
(22) Date de dépôt: 08.03.2010
(51) Int. Cl.: F02P 5/152

(54) **PROCEDE D'ADAPTATION D'UN MOTEUR A l'INDICE DE CARBURANT PAR DECREMENTATION DE L'INDICE D'OCTANE APPRIS DU CARBURANT**
VERFAHREN ZUR ANPASSUNG EINES KRAFTSTOFF-INDEX DURCH DAS INKREMENTIEREN DES GELERNTEN OKTAN-INDEX
METHOD OF ADAPTATION OF A MOTOR TO A FUEL INDEX BY INCREMENTING THE LEARNED OCTANE NUMBER OF THE FUEL

(30) Priorité: 30.04.2009 FR 0952887
(43) Date de publication de la demande: 07.03.2012
(73) Titulaire: Renault S.A.S., 92100 Boulogne-Billancourt (FR)
(72) Inventeur: PINTEAU, Franck, F-92370 Chaville (FR); VALENCIENNES, Edouard, F-75015 Paris (FR)
(86) Numéro de dépôt international: PCT/FR2010/050390
(87) Numéro de publication internationale: WO 2010/125261

(56) Documents cités:
- DE-A1- 4 001 474
- DE-A1- 4 001 476
- US-A- 4 934 327
- US-A- 5 235 953

## Description

L'invention concerne un procédé d'adaptation du moteur à la richesse du carburant, et notamment à l'indice d'octane de ce carburant. Cette invention concerne notamment les moteurs à allumage commandé dont l'avance à l'allumage peut être contrôlée électroniquement. Plus particulièrement, l'invention concerne un procédé d'adaptation par décrémentation de l'indice d'octane appris du carburant.

Actuellement, on trouve divers types de carburants présentant des caractéristiques différentes. Parmi ces caractéristiques figure l'indice d'octane. Parmi les différents carburants, l'indice d'octane peut couramment prendre les valeurs approximatives de 98, 95, 91 et 87. Les carburants présentant des indices 98 et 95 sont souvent utilisés en Europe de l'ouest, ceux présentant un indice d'octane 91 peuvent être rencontrés aux Etats-Unis et ceux présentant un indice d'octane 87 sont par exemple utilisés en Iran.

Pour optimiser le compromis performance, consommation, fiabilité, il est souhaitable d'avoir un réglage moteur, et notamment le réglage d'avance à l'allumage, adapté pour chaque indice d'octane.

Lorsque le réglage d'avance à l'allumage est défini pour un indice d'octane et que le carburant utilisé présente un indice d'octane différent, notamment lors d'un changement de zone géographique, le moteur peut présenter un fonctionnement insatisfaisant. Il peut par exemple présenter un phénomène de cliquetis, en particulier dans le cas où le moteur est optimisé pour un carburant ayant un indice d'octane supérieur au carburant utilisé, ou bien les capacités du moteur peuvent ne pas être optimisées au mieux dans le cas d'un carburant ayant un indice d'octane inférieur à celui pour lequel le moteur est réglé.

Le cliquetis peut notamment être dû à un phénomène de combustion anormale par détonation générant notamment un transfert de chaleur important susceptible d'endommager la chambre de combustion. Le cliquetis peut apparaître de façon plus ou moins aléatoire dans certaines conditions de fonctionnement, notamment lorsque l'indice d'octane du carburant n'est pas adapté au réglage du moteur.

Parmi les techniques pour corriger le phénomène de cliquetis on peut citer la correction anti cliquetis expliquée ci dessous. Celle-ci est utilisée essentiellement lorsque les écarts sont faibles. Cette correction, curative, ne permet pas de corriger de façon satisfaisante les effets de cliquetis lorsque la différence d'indice d'octane est trop importante.

Cette correction anti cliquetis connue comprend deux types d'action :
- une correction rapide, appelée aussi boucle rapide (BR), qui réduit fortement l'avance à l'allumage, et
- une correction lente, appelée aussi boucle lente (BL), qui réduit l'avance à l'allumage de façon moins significative.

Ainsi, par exemple, lors de la détection de cliquetis à un temps t, la boucle rapide (BR) et la boucle lente (BL) sont activées afin d'obtenir une valeur de X° de correction d'avance à l'allumage en vue de supprimer le cliquetis.

A un temps t+1, si le cliquetis n'est plus détecté, on réduit la valeur de la boucle lente (BL) d'une valeur donnée. Cette valeur est réduite de nouveau à chaque temps t+1 pour lequel le cliquetis n'est pas détecté.

Dans le cas où le phénomène de cliquetis est à nouveau détecté, la boucle rapide (BR) et la boucle lente (BL) sont activées à nouveau afin de corriger à nouveau l'avance à l'allumage.

Il est également connu un dispositif permettant de gérer deux réglages basés sur deux indices d'octane différents. Si le cliquetis est détecté pendant une certaine période de temps avec un réglage basé sur l'indice d'octane 98, le réglage est modifié pour se baser sur le réglage de l'indice d'octane 91. Lors de l'arrêt du moteur, le réglage est « remis à zéro », c'est à dire que le réglage revient au réglage par défaut (basé sur l'indice d'octane 98).

Ces dispositifs de correction ne sont cependant pas idéaux. En effet, soit ils manquent de performance et de finesse sur l'indice d'octane détecté, soit ils restent en permanence à la limite de la détection de cliquetis, ce qui peut continuer à endommager la chambre de combustion.

L'invention a pour objectif de permettre au moteur d'être adapté au mieux à l'indice du carburant.

Selon un premier aspect, l'invention a pour objet un procédé d'adaptation du moteur à l'indice d'octane du carburant (par décrémentation de l'indice d'octane appris), dans lequel

le moteur présente un réglage de référence de l'avance à l'allumage dans un champ de fonctionnement moteur pour un indice d'octane déterminé, ledit réglage de référence correspondant à un fonctionnement sans cliquetis du moteur (mais en limite d'apparition du cliquetis) pour un régime et un couple déterminés,

le champ de fonctionnement moteur est découpé en plusieurs zones, comprenant chacune une valeur corrective anti cliquetis de l'avance à l'allumage du réglage de référence, le procédé comprenant au moins les étapes suivantes :
- détection de la présence de cliquetis sur une période de temps t;
- activation d'une boucle de correction de l'avance de l'angle d'allumage dans le cas d'une détection de la présence de cliquetis sur la période de temps t ;
- incrémentation d'un compteur de nombre de zones (CTR) à chaque période de temps (X ms) du nombre de zones dans lesquelles la correction de l'avance de la zone concernée est supérieure à un premier seuil prédéterminé propre à cette zone ;
- test de la correction de l'avance de chaque zone pour déterminer si ladite correction de l'avance dépasse un deuxième seuil prédéterminé propre à cette zone ;

dans lequel lorsque que le compteur du nombre de zones atteint ou dépasse un troisième seuil prédéterminé, ou lorsque la correction d'avance d'au moins une zone dépasse ledit deuxième seuil propre à cette zone, on provoque le basculement vers un réglage de référence correspondant à un indice d'octane inférieur.

Par « champ de fonctionnement moteur », on entend une plage de valeurs comprises entre l'axe des abscisses représentant le régime (vitesse) du moteur, généralement en tours par minute (tr/min), l'axe des ordonnées représentant la charge du moteur, généralement en Newton mètre (N.m) et une courbe représentant les performances maximum du moteur.

Par « réglage de référence », on entend les valeurs données de pilotage du moteur dont une valeur donnée de l'avance à l'allumage dans un champ de fonctionnement moteur, le réglage étant donné pour un régime et un couple déterminés.

Chaque réglage de référence peut être particulier à un champ de fonctionnement moteur donné, différents en fonction de l'indice d'octane du carburant. Par exemple, le couple maximal délivrable par le moteur est dépendant de l'indice d'octane. On comprend alors que le basculement vers un réglage de référence correspond également à un basculement vers un champ de fonctionnement moteur différent.

De préférence, la boucle de correction comporte une boucle de correction rapide et une boucle de correction lente, l'incrémentation du compteur de nombre de zones et la détermination de la correction à l'allumage reposant sur les valeurs de boucle lente (BL) dans les différentes zones du champ de fonctionnement moteur.

Avantageusement, chaque zone conserve en mémoire la dernière correction de l'angle d'avance à l'allumage, notamment la dernière correction de la boucle lente (BL) d'avance à l'allumage.

La mise en mémoire de la dernière correction de boucle lente (BL) de l'angle d'allumage dans une zone permet notamment, lorsque l'on revient dans la zone, de ne pas repartir d'une valeur d'avance à l'allumage de base mais de bénéficier des performances déterminées au préalable et de repartir de la dernière valeur de correction obtenue.

En particulier, le basculement d'un réglage de référence à un réglage de référence inférieur réinitialise les mémoires de chaque zone de la valeur de correction de l'angle d'allumage.

Avantageusement, le compteur de nombre de zones est remis à zéro à pas de calcul pour avoir un nombre de zones toujours à jour.

En particulier, le procédé comprend au moins trois réglages de référence.

Avantageusement, les réglages de référence sont basés sur au moins trois indices d'octane réglables. Les indices d'octane suivants peuvent être choisis : 98, 95, 91 et 87. Toutefois, ces indices d'octane peuvent être choisis librement pour permettre une adaptation aux besoins et contraintes du moteur.

Selon un mode de réalisation particulier, on peut ajouter au moins un réglage éthanol, ayant pour indice E85 et/ou E100.

Selon un mode de réalisation particulier, chaque réglage de référence comprend au moins quatre zones et avantageusement au moins seize zones.

Avantageusement, le champ de fonctionnement moteur de chaque réglage de référence comprend au moins 18 zones.

Une première zone, ci-après nommée zone 0, ne nécessitant pas de valeur corrective de l'avance à l'allumage, les risques de cliquetis étant jugés suffisamment faibles.

Une zone extrême, ci-après nommée zone 17, dans laquelle il est délicat de détecter le cliquetis moteur, pour laquelle on appliquera la valeur de correction de cliquetis de la zone précédente.

Les zones suivantes sont appelées zone 1 à zone 16, et comprennent chacune une valeur initiale corrective de cliquetis ainsi que deux seuils associés à un basculement monozone ou multizone.

L'invention est maintenant décrite en faisant référence aux dessins, non limitatifs, dans lesquels :
La figure 1 représente le champ de fonctionnement moteur d'un véhicule;
La figure 2 représente un diagramme du procédé d'adaptation selon l'invention.

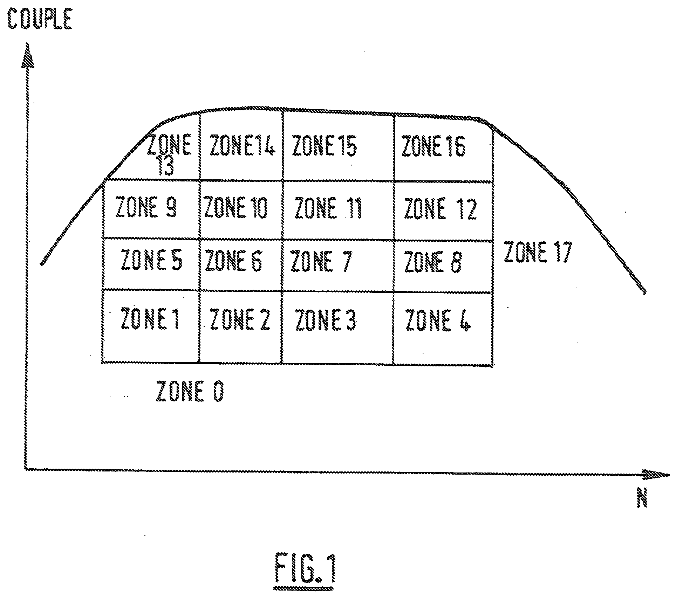

La figure 1 représente le champ de fonctionnement moteur d'un véhicule ou l'axe des abscisses représente le nombre de tour/minute du moteur et l'axe des ordonnées représente la charge du moteur, appelée encore le couple, en N.m. La courbe représente les performances maximum du moteur.

Sur cette figure est représenté un quadrillage composé de dix-huit zones numérotées de 0 à 17.

La zone 0, déterminée en dessous d'un couple particulier, ne nécessite pas de réglage d'avance particulier, le phénomène de cliquetis étant rare et ne risquant donc pas d'endommager la chambre de combustion.

Dans la zone 17, déterminée au dessus d'une vitesse donnée, il devient difficile de détecter le phénomène de cliquetis. On applique alors la valeur corrective de la précédente zone traversée.

Les zones 1 à 16 comprennent chacune une valeur de correction boucle lente (BL) anti-cliquetis de l'avance à l'allumage.

Par exemple, la zone 1 peut avoir une valeur corrective (BL_1) de 2°, la zone 2 une valeur corrective (BL_2) de 5°, la zone 3 une valeur corrective (BL_3) de 4°, la zone 4 une valeur corrective (BL_4) de 1° et ainsi de suite.

Lors du fonctionnement du moteur, le passage dans la zone 1 attribuera alors une avance à l'allumage de 29°, correspondant au réglage de référence 31°, moins une valeur corrective de 2°, correspondant à la valeur corrective de la zone 1. Si le moteur passe dans la zone 2, l'avance à l'allumage sera de 35°, correspondant aux 40° du réglage de référence, moins 5° correspondant à la valeur corrective de la zone 2. Ces différentes valeurs correctives doivent corriger l'avance à l'allumage afin d'obtenir un fonctionnement sans cliquetis.

Toutefois, le phénomène de cliquetis n'est pas toujours éradiqué, notamment si l'on a choisi un carburant possédant un indice d'octane plus faible.

A chaque phénomène de cliquetis, et ce quelque soit la zone concernée, on active une boucle de correction de l'avance, comprenant habituellement une boucle rapide (BR) et une boucle lente (BL). Ainsi, à chaque phénomène de cliquetis, la boucle lente (BL) s'incrémente d'une valeur prédéterminée. Pour l'exemple, on considérera que la boucle rapide (BR) apporte une correction de 4° et la boucle lente (BL) une correction de 2°, à chaque phénomène de cliquetis. Si le phénomène de cliquetis n'est plus détecté, la boucle lente (BL) est dégressive dans le temps d'une valeur prédéterminée. Pour l'exemple, on considérera qu'à chaque temps t+1, la valeur diminuera du quart de sa valeur initiale, soit de 0,5°.

On obtient alors le fonctionnement suivant, lors du passage dans la zone 1, on applique la valeur globale déterminée plus haut, soit 31°-2°. Si on détecte un cliquetis, on ajoute les valeurs de boucle rapide (BR), 4°, ainsi que la valeur de boucle lente (BL), 2°. On obtient alors un réglage de l'avance à l'allumage de 31° -4° - 2° soit 25°. A un temps t+1, si le phénomène de cliquetis n'est plus là, on décrémente la valeur de la boucle lente, dans l'exemple de 0,5°. Dans le même instant, la boucle rapide (BR) s'annule. On aura alors à un temps t+1, une valeur corrective de 29,5° (31°- 1,5°) et à un temps t+2 une valeur corrective de 30° et ainsi de suite. Quand on détecte à nouveau un phénomène de cliquetis, on active à nouveau la boucle de correction. On peut alors se positionner à un temps t+3 où l'on détecte le cliquetis, la valeur corrective précédente étant de 30°, on en retranche la valeur de BR + BL, soit 4° + 2°. On obtient alors un réglage d'avance à l'allumage de 24°.

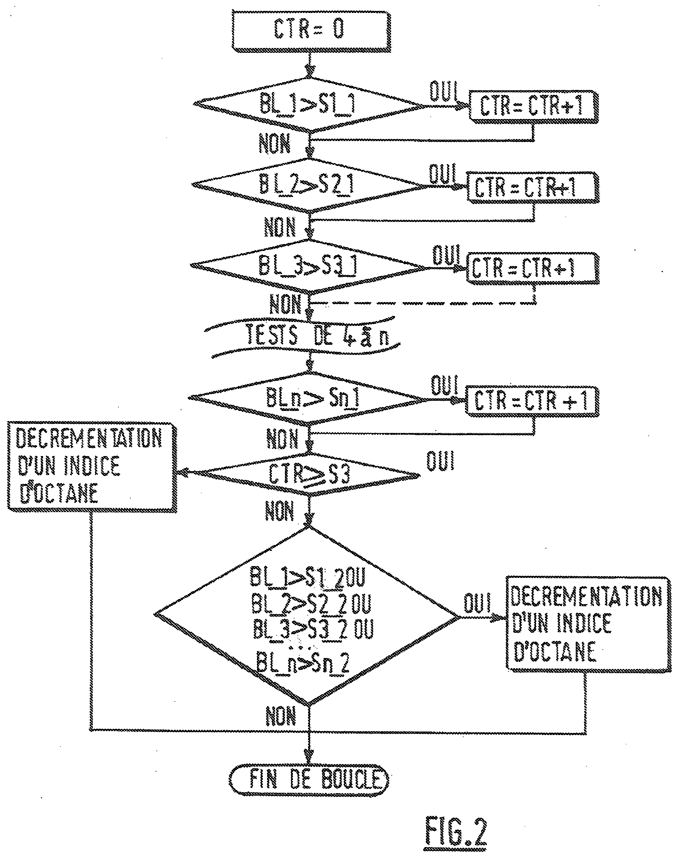

L'invention repose sur deux modes de basculement vers un réglage de référence correspondant à un indice d'octane inférieur, illustrés par le diagramme de la figure 2.

Le premier mode de basculement repose sur le fait que chaque zone de 1 à 16 comprend une valeur seuil (S1_2 à S16_2) de la boucle de correction d'avance. Si la valeur seuil est dépassée dans au moins une zone, on estime que le réglage de l'avance n'est pas adapté pour ce type de carburant et l'on passe alors à un réglage de référence adapté pour un indice d'octane inférieur.

Dans notre exemple, prenons comme valeur seuil de basculement, une valeur de boucle de correction lente (BL) de 4° d'avance, et ce quelque soit la zone concernée. On se fixe alors un seuil de 4° d'avance (S1_2=4) pour la zone 1, 4° d'avance (S2_2=4) pour la zone 2 et ainsi de suite. On pourrait envisager d'avoir des seuils différents dans des zones différentes.

Si l'on se trouve dans la zone 1, la correction boucle lente (BL_1) est incrémentée ou décrémentée en fonction du cliquetis détecté. Lorsque l'on est dans cette zone et que du cliquetis est détecté, la correction de la boucle lente est pleinement incrémentée (de 2° dans l'exemple). Les corrections boucles lentes des zones voisines sont partiellement incrémentées. Lorsque l'on est dans la zone 1 et qu'il n'y a pas de cliquetis détecté, avec une amplitude plus faible que dans le cas du cliquetis détecté (0,5 dans l'exemple), on décrémente pleinement la correction de boucle lente (BL_1) de la zone 1 et partiellement les corrections de boucles lentes des zones voisines.

Les valeurs de corrections de boucles lentes peuvent être mises en mémoire ou remises à zéro régulièrement, par exemple lors de l'ajout de carburant ou à tout autre moment prédéterminé.

Compte tenu des mécanismes d'incrémentation et de décrémentation de la correction de boucle lente, dès que cette dernière atteint au moins 4° dans la zone 1, on bascule vers un réglage de référence adapté à un carburant ayant un indice d'octane 91 (En considérant que le réglage de référence était initialement basé sur un indice d'octane 98).

On peut envisager d'avoir plusieurs réglages de référence, correspondant à divers indices d'octane. Chaque réglage de référence de l'avance à l'allumage définissant les réglages d'avance à l'allumage ainsi que les valeurs de seuils de correction de boucle lente de changement d'indice d'octane de référence.

Le deuxième mode de basculement vers un réglage de référence relatif à un carburant d'indice d'octane inférieur au réglage de référence en cours repose sur le fait que, pour chaque zone, on définit un autre seuil (S1_1 à S16_1) de correction de boucle lente (BL) au-delà duquel on comptabilise cette zone au moyen d'un compteur de nombre de zone (CTR). On obtient alors un nombre de zones pour lesquelles le seuil Sn_1 associé à chacune des zones n est dépassé. Lorsque ce nombre de zones atteint ou dépasse un seuil multizone (S3), on commute alors vers un réglage de référence relatif à un carburant d'indice d'octane inférieur au réglage de référence en cours.

Ainsi, par exemple, si le seuil S3 est défini à 3, il suffit que la boucle lente de la zone 1 dépasse S1_1, la boucle lente de la zone 2 dépasse S2_1, et la boucle lente de la zone 4 dépasse S4_1 pour que l'on commute sur le réglage d'indice d'octane 91 (En considérant que le réglage de référence était initialement basé sur un indice d'octane 95).

Ce comptage de zone par le compteur CTR est effectué chaque X ms (X valant par exemple 100), ce compteur étant remis à zéro toutes les Xms avant de débuter le comptage.

On obtient ainsi deux modes possibles de commutation vers le réglage d'indice d'octane inférieur, le premier reposant sur le dépassement d'un seuil de correction d'avance boucle lente dans au moins une zone et le second étant déclenché lorsqu'on atteint ou dépasse un nombre de zones dans lesquelles la correction boucle lente dépasse un autre seuil.

Chaque zone conserve la dernière valeur de correction boucle lente du réglage d'avance afin de repartir de la valeur optimum de réglage lors du prochain passage dans ladite zone. Ces valeurs peuvent toutefois être remises à zéro lors du changement de réglage de référence et donc de champ de fonctionnement moteur.

## Revendications

1. Procédé d'adaptation du moteur à l'indice d'octane du carburant par décrémentation de l'indice d'octane appris, ledit procédé partant d'un réglage de référence de l'avance à l'allumage dans un champ de fonctionnement moteur (10) pour un indice d'octane déterminé, ledit réglage de référence correspondant à un fonctionnement sans cliquetis du moteur pour un régime (N) et un couple déterminés, le champ de fonctionnement moteur (10) étant découpé en plusieurs zones (1 à 16), chacune d'elle comprenant une valeur corrective anti-cliquetis de l'avance à l'allumage du réglage de référence, le procédé comprenant au moins les étapes suivantes :
- Détection de la présence de cliquetis sur un période de temps t ;
- Activation d'une boucle de correction de l'avance de l'angle d'allumage dans le cas d'une détection de la présence de cliquetis sur la période de temps t;
- incrémentation d'un compteur de nombre de zones (CTR) à chaque période de temps (X ms) du nombre de zones dans lesquelles la correction de l'avance de la zone concernée est supérieure à un premier seuil prédéterminé propre à cette zone ;
- test de la correction de l'avance de chaque zone pour déterminer si ladite correction de l'avance dépasse un deuxième seuil prédéterminé propre à cette zone ;
dans lequel, lorsque que le compteur du nombre de zones atteint ou dépasse un troisième seuil prédéterminé, ou lorsque la correction d'avance d'au moins une zone dépasse ledit deuxième seuil propre à cette zone, on provoque le basculement vers un réglage de référence correspondant à un indice d'octane inférieur.

2. Procédé selon la revendication 1, **caractérisé en ce que** la boucle de correction comporte une boucle de correction rapide (BR) et une boucle de correction lente (BL), l'incrémentation du compteur de nombre de zones et la détermination de la correction à l'allumage reposant sur les valeurs de boucle lente (BL) dans les différentes zones du champ de fonctionnement moteur.

3. Procédé selon la revendication 1 ou 2, **caractérisé en ce que** chaque zone conserve en mémoire la dernière correction de l'angle d'avance à l'allumage.

4. Procédé selon la revendication 3, **caractérisé en ce que** le basculement d'un réglage de référence à un réglage de référence inférieur réinitialise les mémoires de chaque zone de la valeur de correction de l'angle d'allumage.

5. Procédé selon l'une quelconque des revendications 1 à 4, **caractérisé en ce qu'**il comprend au moins trois réglages de référence.

6. Procédé selon l'une quelconque des revendications 1 à 5, **caractérisé en ce que** chaque réglage de référence comprend au moins quatre zones et avantageusement au moins seize zones.

## Patentansprüche

1. Verfahren zur Anpassung des Motors an den Oktan-Index des Kraftstoffs durch Dekrementieren des gelernten Oktan-Index, wobei das Verfahren von einer Referenzeinstellung der Zündvorstellung in einem Motorbetriebsbereich (10) für einen bestimmten Oktan-Index ausgeht, wobei die Referenzeinstellung einem Betrieb ohne Klopfen des Motors für eine bestimmte Drehzahl (N) und einen bestimmten Drehmoment entspricht, wobei der Motorbetriebsbereich (10) in mehrere Zonen (1 bis 16) unterteilt ist, von welchen jede einen Klopfschutz-Korrekturwert der Zündvorstellung der Referenzeinstellung umfasst, wobei das Verfahren mindestens die folgenden Schritte umfasst:
- Erfassen der Gegenwart von Klopfen während einer Zeitspanne t,
- Aktivieren einer Korrekturschleife der Vorstellung des Zündwinkels in dem Fall eines Erfassens der Gegenwart von Klopfen während der Zeitspanne t,
- Inkrementieren eines Zonenanzahlzählers (CDR) bei jeder Zeitspanne (X ms) der Anzahl von Zonen, um welche die Korrektur der Vorstellung der betreffenden Zone größer ist als ein erster vorbestimmter Schwellenwert, der dieser Zone eigen ist,
- Testen der Korrektur der Vorstellung jeder Zone, um zu bestimmen, ob die Korrektur der Vorstellung einen zweiten vorbestimmten Schwellenwert überschreitet, der dieser Zone eigen ist,
wobei, wenn der Zonenanzahlzähler einen dritten vorbestimmten Schwellenwert erreicht oder überschreitet, oder wenn die Korrektur der Vorstellung mindestens einer Zone den zweiten Schwellenwert überschreitet, der dieser Zone eigen ist, man das Umwechseln zu einer Referenzeinstellung auslöst, die einem niedrigeren Oktan-Index entspricht.

2. Verfahren nach Anspruch 1, **dadurch gekennzeichnet, dass** die Korrekturschleife eine schnelle Korrekturschleife (BR) und eine langsame Korrekturschleife (BL) umfasst, wobei das Inkrementieren des Zonenanzahlzählers und das Bestimmen der Korrektur beim Zünden auf Werten der langsamen Schleife (BL) in den verschiedenen Zonen des Motorbetriebsbereichs beruhen.

3. Verfahren nach Anspruch 1 oder 2, **dadurch gekennzeichnet, dass** jede Zone die letzte Korrektur des Zündvorstellungswinkels im Speicher behält.

4. Verfahren nach Anspruch 3, **dadurch gekennzeichnet, dass** das Umwechseln von einer Referenzeinstellung auf eine niedrigere Referenzeinstellung die Speicher jeder Zone des Zündwinkelkorrekturwerts zurückstellt.

5. Verfahren nach einem der Ansprüche 1 bis 4, **dadurch gekennzeichnet, dass** es mindestens drei Referenzeinstellungen umfasst.

6. Verfahren nach einem der Ansprüche 1 bis 5, **dadurch gekennzeichnet, dass** jede Referenzeinstellung mindestens vier Zonen und vorteilhafterweise mindestens sechzehn Zonen umfasst.

## Claims

1. Method of adapting the engine to the octane number of the fuel by decrementing the learned octane number, said method starting out from a reference setting of the ignition advance in an engine operating range (10) for a determined octane number, said reference setting corresponding to a pinging-free operation of the engine at a determined speed (N) and a determined torque, the operating range of the engine (10) being broken down into several zones (1 to 16), each of them comprising an anti-pinging corrective value to be applied to the ignition advance of the reference setting, the method comprising at least the following steps:
- detecting the presence of pinging over a time period t;
- activating an ignition advance angle correction loop if pinging is detected over a time period t;
- incrementing a zones number counter (CTR) in each time period (X ms) by the number of zones in which the correction of the advance of the zone concerned is greater than a first predetermined threshold specific to this zone;
- testing the correction of the advance of each zone so as to determine whether said correction of the advance exceeds a second predetermined threshold specific to this zone;
in which, when the zones number counter reaches or exceeds a third predetermined threshold, or when the correction of advance of at least one zone exceeds said second threshold specific to this zone, a switch to a reference setting corresponding to a lower octane number is triggered.

2. Method according to Claim 1, **characterized in that** the correction loop comprises a fast correction loop (BR) and a slow correction loop (BL), the incrementing of the zones number counter and the determination of the correction to ignition relying on the values from the slow loop (BL) in the various zones of the engine operating range.

3. Method according to Claim 1 or 2, **characterized in that** each zone retains in memory the last correction of the ignition advance angle.

4. Method according to Claim 3, **characterized in that** the switching from a reference setting to a lower reference setting reinitializes the memories of each zone of the ignition angle correction value.

5. Method according to any one of Claims 1 to 4, **characterized in that** it comprises at least three reference settings.

6. Method according to any one of Claims 1 to 5, **characterized in that** each reference setting comprises at least four zones and advantageously at least sixteen zones.
